# EUROPÄISCHE PATENTSCHRIFT

(11) **EP 2 824 743 B1**
(45) Veröffentlichungstag und Bekanntmachung des Hinweises auf die Patenterteilung: **15.11.2017**
(21) Anmeldenummer: 14175569.4
(22) Anmeldetag: 03.07.2014
(51) Int. Cl.: H01M 8/04746, H01M 8/0662, H01M 8/04014, H01M 8/04701, H01M 8/124, H01M 8/0612

(54) **Verfahren zur Regelung einer Brennstoffzelle**
Method for controlling a fuel cell
Procédé de réglage d'une pile à combustible

(30) Priorität: 08.07.2013 AT 5662013
(43) Veröffentlichungstag der Anmeldung: 14.01.2015
(73) Patentinhaber: Vaillant GmbH, 42859 Remscheid (DE)
(72) Erfinder: Reinert, Andreas, 58455 Witten (DE); Ehlers, Andreas, 42857 Remscheid (DE); Alff, Carsten, 53567 Buchholz (DE)
(74) Vertreter: Popp, Carsten

(56) Entgegenhaltungen:
- WO-A2-2004/045004
- WO-A2-2007/136077
- US-A1- 2012 178 003

## Beschreibung

Die Erfindung betrifft ein Verfahren zur Regelung einer Brennstoffzelle, bevorzugt einer SOFC-Brennstoffzelle.

Aus der Patentanmeldung EP 1 205 993 A1 ist ein Verfahren zum Betreiben einer Brennstoffzellenanlage bekannt. Die gasförmige Ströme zweier Edukte, eine oxidierende Komponente, z.B. Umgebungsluft, und eine reduzierende Komponente, werden in einem bedingt vergebenen Mengenverhältnis gesteuert in den Brennstoffzellenstapel eingespeist und getrennt durch die Zellen geführt. Die Edukte werden nach Durchgang durch die Zellen vereinigt und mittels einer Nachverbrennung und unter Erzeugung eines Stroms von Abgas weiter behandelt, so dass bei dem bedingt vergebenen Mengenverhältnis die reduzierenden Komponenten vollständig oxidiert werden. Der erste Eduktstrom ist dabei durch die Steuerung in beschränktem Maß variierbar, so dass er zur Regelung der Reaktionstemperatur verwendet werden kann, während der zweite Eduktstrom mittels einer zweiten Regelung konstant gehalten wird.

Die Patentanmeldung US 2012/0178003 A1 offenbart ein Verfahren, bei dem zusätzlich die Temperatur des Nachbrenners durch die Anpassung der Brennstoffzufuhr eingestellt wird.

Die Patentanmeldung WO 2007/136077 A2 beschreibt ein Brennstoffzellensystem mit einem zusätzlichen Brenner zum Beheizen eines Wärmetauschers zur Vorwärmen des der Brennstoffzelle zugeführten sauerstoffhaltigen Gases.

Die Patentanmeldung WO 2004/045004 A2 offenbart ein Brennstoffzellensystem und ein zugehöriges Verfahren, bei dem die Temperatur der Nachverbrennung anhand einer Enthalpie-Berechnung basierend auf Zustandssignalen vorhergesagt wird. Bei Überschreiten eines oberen Grenzwertes wird das Kathodenabgas-Volumen erhöht.

Der Nachteil ist jedoch, dass sich die Regelungen nach dem Stand der Technik nicht an verschiedene Gasarten und Lastzustände anpassen.

Aufgabe der Erfindung ist es, ein Regelungskonzept zu schaffen, welches dem SOFC-Brennstoffzellensystem unabhängig von der zur Verfügung stehenden Gasqualität die verschiedenen Prozessgase in der richtigen Menge zur Verfügung stellt. Ziel der Regelung der Brenngasausnutzung ist dabei, die Brenngasausnutzung im Brennstoffzellenstack in einem bestimmten Betriebsfenster zu halten. Zu kleine Brenngasausnutzungen machen das SOFC System ineffizient und können zur Überhitzung der Nachverbrennung führen. Zu hohe Brenngasausnutzungen können zur Beschädigung des Brennstoffzellenstacks führen.

Dies wird erreicht, indem zur Regelung der Brenngasausnutzung die Temperatur der Nachverbrennung herangezogen wird. In der Nachverbrennung werden das Anodenabgas und das Kathodenabgas miteinander vermischt und nachverbrannt. Die Abgase des Stacks kommen ungefähr mit der Temperatur im Brennstoffzellenstapel in der Nachverbrennung an. Abhängig von der Brenngasausnutzung (Verhältnis der im Brennstoffzellenstapel umgesetzten Brennstoffmasse zu der dem Brennstoffzellenstapel zugeführten Brennstoffmasse) im Brennstoffzellenstapel stellt sich im Nachbrenner ein bestimmtes Verbrennungslambda ein, welches wiederum eine bestimmte Temperatur der Nachverbrennung nach sich zieht, die um ein bestimmtes Maß über der Stacktemperatur liegt. Die Solltemperatur der Nachverbrennung ist eine vom elektrischen Strom abhängige Funktion, wobei die Solltemperatur des Nachbrenners für eine geringe Teillast zunächst konstant gehalten wird und oberhalb einer Teillast, die 50% des Nennstroms beträgt, mit dem Strom des Brennstoffzellenstacks stetig ansteigt.

Im Regelkreis wirkt hier also eine Temperatur der Nachverbrennung als Ersatz für die Brenngasausnutzung als Regelgröße. Als Stellglied befinden sich Proportionalventile im Anodengasweg, die unabhängig oder abhängig voneinander die Reformereduktströme anheben oder absenken. Eines dieser Ventile befindet sich im Regelkreis. Alternativ kann der Brenngasvolumenstrom bei komplett geöffnetem Ventil über die Gebläsedrehzahl verändert werden. Dies führt zu einer bestmöglichen Effizienz, da die Systemdruckverluste durch den Regelkreis mit Nachbrennertemperatur und Gebläsedrehzahl so minimiert werden. Es sind auch beide Varianten möglich, d.h. bei niedrigen Volumenströmen Verwendug des Ventils und ab der vollständigen Öffnung des Ventils die Anhebung der Gebläsedrehzahl.

Die Erfindung wird nun anhand der Figuren detailliert erläutert.

Es stellen dar:
Figur 1: Das Schema einer Brennstoffzellenanlage zur Durchführung des erfindungsgemäßen Verfahrens.
Figur 2: Die Darstellung des Verlaufs der Solltemperatur des Nachbrenners, der Temperatur des Brennstoffzellenstapels und der Brenngas Ausnutzung über dem Strom.

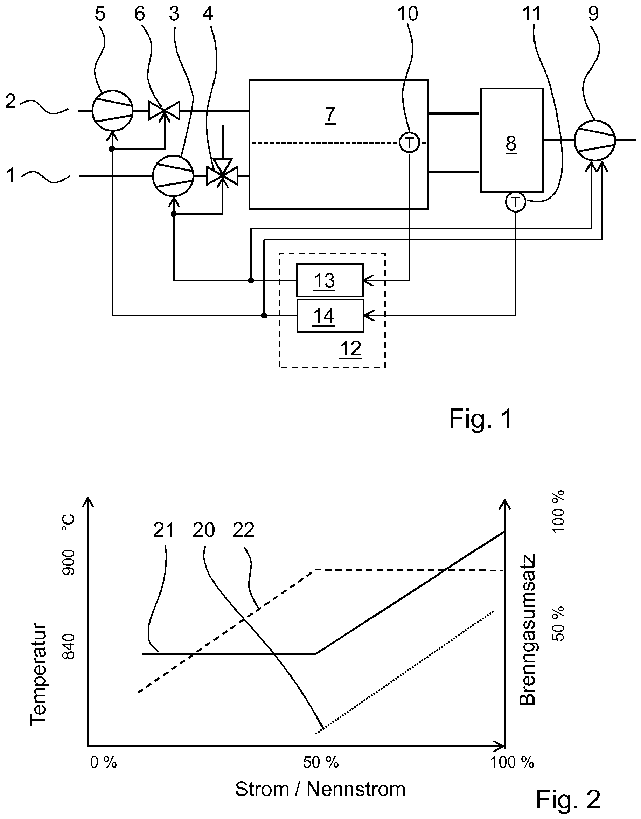

Figur 1 stellt das Schema einer Brennstoffzellenanlage dar, die zur Durchführung des erfindungsgemäßen Verfahrens geeignet ist.

Aus Gründen der Übersichtlichkeit wurde Komponenten einer Brennstoffzellenanlage, die für die Beschreibung der Erfindung nicht relevant sind, nicht dargestellt. Dies sind insbesondere Komponenten der Wärmeabfuhr und der Stromerzeugung sowie zum Beispiel ein Reformer.

Kern der Brennstoffzellenanlage ist der Brennstoffzellenstapel 7, dem über eine Zuleitung für das erste Edukt 1 eine oxidierende Komponente, beispielsweise Umgebungsluft, zugeführt wird. Über ein Gebläse 3 und/oder ein Ventil 4 wird der Massenstrom des ersten Edukts eingestellt. Die Darstellung des Gebläses und des Ventils ist stellvertretend für jede andere Möglichkeit, den Massenstrom des Edukts zu verändern. Insbesondere kann dies auch an anderer Stelle, beispielsweise mit einem als Saugebläse ausgeführten Abgasgebläse 9 erfolgen. Das erste Edukt kann optional über einen hier nicht dargestellten Abgaswärmetauscher geführt werden. Darüber hinaus kann in einer Ausführungsvariante das Ventil 4 bei Verwendung eines Abgaswärmetauschers als 3-Wege-Ventil ausgeführt werden, wobei der Massenstrom auch dadurch erhöht werden kann, dass nicht vorgewärmte (kalte) Luft zu gemischt wird. Hierdurch ist eine noch bessere Regelung der Temperatur des Brennstoffzellenstapels möglich.

Über eine Zuleitung für das zweite Edukt 2 wird eine reduzierende Komponente, beispielsweise ein mit einem Reformer aufbereitetes Brenngas, welches von einem hier nicht dargestellten Reformer aufbereitet worden sein kann, dem Brennstoffzellenstapel 7 zugeführt. Auch hier wird der Massenstrom des zweiten Edukts über ein Gebläse 5 und/oder ein Ventil 6 und/oder ein Abgasgebläse 9 eingestellt. Auch hier ist das Gebläse 5 und das Ventil 6 stellvertretend für jede andere Möglichkeit, den Massenstrom des zweiten Edukts zu verändern. Innerhalb des Brennstoffzellenstapels wird die chemisch gebundene Energie des Brennstoffs in elektrische Energie umgewandelt, wobei auch Wärme entsteht. Anschließend werden die dabei umgewandelten Gase einem Nachbrenner 8 zugeführt und dort nachverbrannt. Über eine Abgasleitung, die optional ein Abgasgebläse 9 umfasst, wird das Abgas abgeleitet. Eine Regelungsvorrichtung 12 erfasst über einen Temperatursensor 10 die Temperatur des Brennstoffzellenstapels und beeinflusst über einen ersten Regler 13 den Massenstrom und optional die Temperatur im Falle der Zumischung von kalter Luft des ersten Edukts, indem das Gebläse 3 und/oder das Ventil 4 und/oder das Abgasgebläse 9 angesteuert wird. Somit dient der erste Regler zur Regelung der Temperatur des Brennstoffzellenstapels 7. Ebenfalls erfasst die Regelungsvorrichtung 12 über einen weiteren Temperatursensor 11 die Temperatur des Nachbrenners 8 und beeinflusst über einen zweiten Regler 14 den Massenstrom des zweiten Edukts über das Gebläse 5 und/oder das Ventil 6 und/oder das Abgasgebläse 9. Die Solltemperatur des Nachbrenners 8 ist ein konstanter Temperaturwert oder eine vom elektrischen Strom abhängige Funktion. Dabei wird berücksichtigt, dass die Gase bereits mit der Temperatur des Brennstoffzellenstapels 7 in den Nachbrenner eintreten. Die Erfindung macht sich die Tatsache zu Nutze, dass bei einer ineffizienten Ausnutzung des Brenngases im Brennstoffzellenstapel 7 eine höhere Temperatur im Nachbrenner einstellt. Daher repräsentiert die Temperatur im Nachbrenner 8 die Brenngasausnutzung als Regelgröße. Ungünstig kann aber auch eine zu hohe Ausnutzung sein da diese den Brennstoffzellenstapel 7 schädigen kann dies führt aber zu einer niedrigeren Temperatur im Nachbrenner 8.

Figur 2 stellt den Verlauf der Solltemperatur des Nachbrenners, der Temperatur des Brennstoffzellenstapels und der Brenngas Ausnutzung über dem Strom dar. Dabei wird der Sollwert des Nachbrenners für eine geringe Teillast zunächst konstant gehalten. Dies ist erforderlich, um eine Mindesttemperatur des Nachbrenners zu gewährleisten, da anderenfalls die Nachverbrennung nicht möglich ist. Oberhalb einer bestimmten Teillast steigt dann die Solltemperatur mit dem Strom, der hier im Verhältnis zum Nenn strom dargestellt ist, stetig an, bevorzugt linear an. In einer nicht erfindungsgemäßen Alternativen des Verfahrens wird der Sollwert der Temperatur nicht absolut, sondern relativ zur Temperatur des Brennstoffzellenstapels festgelegt.

Dies kann eine konstante Temperaturdifferenz oder eine vom Strom abhängige Temperaturdifferenz sein.

Ebenfalls in Figur 2 dargestellt ist der Verlauf des Brenngasumsatzes im Brennstoffzellenstapel 7. Die Angabe bezieht sich auf das Verhältnis der innerhalb des Brennstoffzellenstapels 7 umgesetzten Menge an Brenngas zu der am Eingang des Brennstoffzellenstapels 7 zur Verfügung stehenden Menge an Brenngas. Eine Differenz zu 100 % bedeutet, dass die restliche Menge Brenngas im Nachbrenner 8 verbrannt wird. Dieser Verlauf leitet sich direkt aus dem Verlauf der Solltemperatur im Nachbrenner ab, da eine hohe Temperatur im Nachbrenner 8 einen hohen Brenngasbedarf und damit automatisch einen niedrigeren Brenngasumsatz im Brennstoffzellenstapel 7 nach sich führt.

### Bezugszeichenliste

- 1: Zuleitung für erstes Edukt
- 2: Zuleitung für zweites Edukt
- 3: Gebläse für erstes Edukt
- 4: Ventil für erstes Edukt
- 5: Gebläse für zweites Edukt
- 6: Ventil für zweites Edukt
- 7: Brennstoffzellenstapel
- 8: Nachbrenner
- 9: Abgasgebläse
- 10: Temperatursensor Brennstoffzellenstapel
- 11: Temperatursensor Nachbrenner
- 12: Regelungsvorrichtung
- 13: Erster Regler
- 14: Zweiter Regler
- 20: Temperatur Brennstoffzellenstapel
- 21: Solltemperatur Nachbrenner
- 22: Brenngasumsatz

## Patentansprüche

1. Verfahren zur Regelung der Brenngaszufuhr einer Brennstoffzellenanlage, insbesondere einer SOFC-Brennstoffzellenanlage, umfassend einen Brennstoffzellenstack (7) zur Erzeugung von Strom und einen Nachbrenner (8) zur Nachverbrennung, wobei dem Brennstoffzellenstack (7) ein erstes Edukt (1) in Form einer oxidierenden Komponente und ein zweites Edukt (2) in Form einer reduzierenden Komponente zugeführt wird, wobei die Edukte nach Durchgang durch den Brennstoffzellenstack (7) dem Nachbrenner (8) zugeführt werden, und wobei mit einem ersten Regler (13) der Massenstrom des ersten Edukts (1) zur Regelung der Temperatur des Brennstoffzellenstacks (7) variiert wird, wobei zusätzlich und parallel mit einem zweiten Regler (14) der Massenstrom des zweiten Edukts (2) zur Regelung der Temperatur der Nachverbrennung variiert wird, **dadurch gekennzeichnet, dass** die Solltemperatur der Nachverbrennung durch eine vom Strom des Brennstoffzellenstacks (7) abhängige Funktion beschrieben wird, wobei die Solltemperatur des Nachbrenners (8) für eine geringe Teillast zunächst konstant gehalten wird und oberhalb einer Teillast, die 50% des Nennstroms beträgt, mit dem Strom des Brennstoffzellenstacks (7) stetig ansteigt.

2. Verfahren nach Anspruch 1, wobei die Solltemperatur des Nachbrenners (8) oberhalb einer Teillast, die 50% des Nennstroms beträgt, mit dem Strom des Brennstoffzellenstacks (7) linear ansteigt.

3. Verfahren nach einem der vorhergehenden Ansprüche, wobei mit dem ersten Regler (13) der Massenstrom und die Temperatur des ersten Edukts (1) zur Regelung der Temperatur des Brennstoffzellenstacks (7) variiert wird.

4. Verfahren nach einem der vorhergehenden Ansprüche, wobei die Temperatur der Nachverbrennung durch die Temperatur des Nachbrenners (8) repräsentiert wird.

5. Verfahren nach einem der Ansprüche 1 bis 4, wobei die Solltemperatur der Nachverbrennung als Differenz zur Temperatur des Brennstoffzellenstacks (7) dargestellt wird.

6. Verfahren nach Anspruch 5, wobei die Differenz vom Strom des Brennstoffzellenstacks (7) abhängig ist.

7. Verfahren nach einem der Ansprüche 1 bis 6, wobei die Variation des Massenstroms einer der Edukte durch die Änderung einer Stellung von Ventilen (4, 6) erfolgt.

8. Verfahren nach Anspruch 7, wobei das Ventil (4) als 3-Wege-Ventil ausgeführt ist, wobei das erste Edukt über einen Abgaswärmetauscher zugeführt wird und wobei der Massenstrom des ersten Edukts auch dadurch erhöht wird, dass nicht vorgewärmte Luft zugemischt wird.

9. Verfahren nach einem der Ansprüche 1 bis 8, wobei die Variation des Massenstroms einer der Edukte durch die Änderung der Drehzahl von Gebläsen (3, 5) erfolgt.

## Claims

1. Method for regulating the fuel gas feed to a fuel cell unit, in particular a SOFC fuel cell unit, comprising a fuel cell stack (7) for generating current and an afterburner (8) for the post-combustion, wherein a first educt (1) in the form of an oxidising component and a second educt (2) in the form of a reducing component are fed to the fuel cell stack (7), wherein after passage through the fuel cell stack (7) the educts are fed to the afterburner (8), and wherein the mass flow of the first educt (1) is varied with a first regulator (13) in order to regulate the temperature of the fuel cell stack (7), wherein in addition and in parallel the mass flow of the second educt (2) is varied with a second regulator (14) in order to regulate the temperature of the post-combustion, **characterised in that** the target temperature of the post-combustion is described by a function depending on the current of the fuel cell stack (7), wherein the target temperature of the afterburner (8) is first of all maintained constant for a low partial load, and above a partial load that amounts to 50% of the rated current, the temperature constantly rises with the current of the fuel cell stack (7).

2. Method according to claim 1, wherein the target temperature of the afterburner (8) rises above a partial load that amounts to 50% of the rated current linearly with the current of the fuel cell stack (7).

3. Method according to one of the preceding claims, wherein the mass flow and the temperature of the first educt (1) are varied with the first regulator (13) in order to regulate the temperature of the fuel cell stack (7).

4. Method according to one of the preceding claims, wherein the temperature of the post-combustion is represented by the temperature of the afterburner (8).

5. Method according to one of claims 1 to 4, wherein the target temperature of the post-combustion is represented as the difference with respect to the temperature of the fuel cell stack (7).

6. Method according to claim 5, wherein the difference depends on the current of the fuel cell stack (7).

7. Method according to one of claims 1 to 6, wherein the variation of the mass flow of one of the educts is carried out by altering a setting of valves (4, 6).

8. Method according to claim 7, wherein the valve (4) is designed as a three-way valve, wherein the first educt is fed via an exhaust gas heat exchanger and wherein the mass flow of the first educt is also increased by mixing non-preheated with it.

9. Method according to one of claims 1 to 8, wherein the variation of the mass flow of one of the educts is carried out by altering the speed of fans (3, 5).

## Revendications

1. Procédé de réglage de l'alimentation en combustible d'une installation de piles à combustible, en particulier d'une installation de piles à combustible SOFC, comprenant un empilement de piles à combustible (7) pour produire du courant et un post-brûleur (8) destiné à la post-combustion, dans lequel un premier éduit (1) sous la forme d'un composant oxydant et un second éduit (2) sous la forme d'un composant réducteur sont acheminés à l'empilement de piles à combustible (7), dans lequel les éduits sont acheminés au post-brûleur (8) après passage à travers l'empilement de piles à combustible (7) et dans lequel le courant massique du premier éduit (1) est modifié par un premier régulateur (13) pour régler la température de l'empilement de piles à combustible (7), dans lequel, en plus et en parallèle avec un second régulateur (14), le courant massique du second éduit (2) est modifié pour régler la température de la post-combustion, **caractérisé en ce que** la température théorique de la post-combustion est décrite par une fonction dépendant du courant de l'empilement de piles à combustible (7), dans lequel la température théorique du post-brûleur (8) est tout d'abord maintenue constante pour une faible charge partielle et, au-dessus d'une charge partielle qui atteint 50 % du courant nominal, augmente en continu avec le courant de l'empilement de piles à combustible (7).

2. Procédé selon la revendication 1, dans lequel la température théorique du post-brûleur (8) augmente de manière linéaire, au-dessus d'une charge partielle qui atteint 50 % du courant nominal, avec le courant de l'empilement de piles à combustible (7).

3. Procédé selon l'une quelconque des revendications précédentes, dans lequel le courant massique et la température du premier réduit (1) sont modifiés avec le premier régulateur (13) pour régler la température de l'empilement de piles à combustible (7).

4. Procédé selon l'une quelconque des revendications précédentes, dans lequel la température de la post-combustion est représentée par la température du post-brûleur (8).

5. Procédé selon l'une quelconque des revendications 1 à 4, dans lequel la température théorique de la post-combustion est présentée comme la différence avec la température de l'empilement de piles à combustible (7).

6. Procédé selon la revendication 5, dans lequel la différence dépend du courant de l'empilement de piles à combustible (7).

7. Procédé selon l'une quelconque des revendications 1 à 6, dans lequel la variation du courant massique d'un des éduits se fait par la modification d'une position de vannes (4, 6).

8. Procédé selon la revendication 7, dans lequel la vanne (4) est conçue sous la forme d'une vanne à trois voies, dans lequel le premier éduit est acheminé via un échangeur de chaleur de gaz d'échappement et dans lequel le courant massique du premier éduit est également augmenté de sorte que soit mélangé de l'air non préchauffé.

9. Procédé selon l'une quelconque des revendications 1 à 8, dans lequel la variation du courant massique d'un des éduits se fait par la modification de la vitesse de rotation de soufflantes (3, 5).
